# EUROPEAN PATENT APPLICATION

(11) **EP 4 814 713 A1**
(43) Date of publication of application: **30.09.2026**
(21) Application number: 26166618.4
(22) Date of filing: 23.03.2026
(51) Int. Cl.: G06F 9/455

(54) **UNTRUSTED RDMA NIC IN CONFIDENTIAL COMPUTING ENVIRONMENTS**

(30) Priority: 23.03.2025 US 202519087521
(71) Applicant: Mellanox Technologies, Ltd., 2069200 Yokneam (IL)
(72) Inventor: PISMENNY, Boris, 2069200 Yokneam (IL); GUNTHORPE, Jason, 2069200 Yokneam (IL); LISS, Liran, 2069200 Yokneam (IL)
(74) Representative: Mathys & Squire

(57) **Abstract**

A computing device includes a bus interface and a Central Processing Unit (CPU). The bus interface is to communicate over a peripheral bus with an untrusted Remote Direct Memory Access (RDMA) network adapter. The CPU is to run a Confidential Virtual Machine (CVM), and to enable the CVM to conduct RDMA transactions over a network via the untrusted RDMA network adapter by mapping one or more RDMA Memory Regions (MR) to a shared memory that is accessible to the untrusted RDMA network adapter.

## Description

### TECHNICAL FIELD

The present disclosure relates generally to confidential computing, and particularly to methods and systems for Remote Direct Memory Access (RDMA) communication in confidential computing environments.

### BACKGROUND

Confidential computing refers to the use of advanced technologies to protect data while it is being processed, ensuring that sensitive information remains secure even in untrusted environments. Such protection is achieved, for example, using hardware-based trusted execution environments (TEEs). TEEs provide an isolated area for executing code and handling data, preventing unauthorized access. One technology that enables confidential computing is the Confidential Virtual Machine (CVM), a specialized virtual machine designed to run in secure environments. CVMs use TEEs to provide strong data privacy and integrity guarantees, ensuring that workloads can be safely executed without exposing sensitive data to potential threats, even from cloud providers or system administrators.

### SUMMARY

The invention is defined by the claims. In order to illustrate the invention, aspects and embodiments which may or may not fall within the scope of the claims are described herein.

An embodiment that is described herein provides a computing device including a bus interface and a Central Processing Unit (CPU). The bus interface is to communicate over a peripheral bus with an untrusted Remote Direct Memory Access (RDMA) network adapter. The CPU is to run a Confidential Virtual Machine (CVM), and to enable the CVM to conduct RDMA transactions over a network via the untrusted RDMA network adapter by mapping one or more RDMA Memory Regions (MR) to a shared memory that is accessible to the untrusted RDMA network adapter.

In some embodiments, the CPU is to further run an untrusted hypervisor, and the CVM is to communicate with the untrusted RDMA network adapter via the untrusted hypervisor. In a disclosed embodiment, the untrusted RDMA network adapter exchanges packets with the CVM using one or more Queue Pairs (QPs), and the CPU is to map the one or more QPs to the shared memory.

In an example embodiment, the CVM is to send a packet by writing an encrypted payload of the packet to a MR that is mapped to the shared memory, and posting a Work Queue Element (WQE), indicative of the packet to be sent, on a Queue Pair (QP) associated with the MR. In an example embodiment, the CVM is to receive a packet by reading a Completion Queue Element (CQE), indicative of the received packet, from a Queue Pair (QP) associated with a MR that is mapped to the shared memory, and reading an encrypted payload of the packet from the MR.

In some embodiments, the CVM is to authorize the untrusted RDMA network adapter to access a specified region in a shared memory of an external device coupled to the peripheral bus. In an example embodiment, the external device is a Graphics Processing Unit (GPU).

In an embodiment, the CVM is to implement a Key-Value (KV) store comprising encrypted KV pairs in the shared memory. In an example embodiment, upon mapping a given MR to the shared memory, the CVM is to copy existing content of the MR from private memory to the shared memory, unless provided with an indication that the existing content can be discarded. In an embodiment, a user application in the CVM is to allocate shared memory up front, and the CVM is to register the allocated shared memory as a MR for use in RDMA.

There is additionally provided, in accordance with an embodiment that is described herein, a computing method including running a Confidential Virtual Machine (CVM) in a Central Processing Unit (CPU). The CVM is enabled to conduct RDMA transactions over a network via an untrusted Remote Direct Memory Access (RDMA) network adapter, by mapping one or more RDMA Memory Regions (MR) to a shared memory that is accessible to the untrusted RDMA network adapter.

In some embodiments, the method further comprises running an untrusted hypervisor in the CPU, and communicating between the CVM and the untrusted RDMA network adapter via the untrusted hypervisor. In a disclosed embodiment, the untrusted RDMA network adapter exchanges packets with the CVM using one or more Queue Pairs (QPs), and wherein enabling the CVM to conduct RDMA transactions mapping the one or more QPs to the shared memory.

In an example embodiment, the method further comprises sending a packet by the CVM, by: writing an encrypted payload of the packet to a MR that is mapped to the shared memory; and posting a Work Queue Element (WQE), indicative of the packet to be sent, on a Queue Pair (QP) associated with the MR. In an example embodiment, the method comprises receiving a packet by the CVM, by: reading a Completion Queue Element (CQE), indicative of the received packet, from a Queue Pair (QP) associated with a MR that is mapped to the shared memory; and reading an encrypted payload of the packet from the MR.

In some embodiments, the method further comprises authorizing the untrusted RDMA network adapter, by the CVM, to access a specified region in a shared memory of an external device. In an example embodiment, the external device is a Graphics Processing Unit (GPU).

In an embodiment, the method comprises implementing, by the CVM, a Key-Value (KV) store comprising encrypted KV pairs in the shared memory. In an example embodiment, the method comprises, upon mapping a given MR to the shared memory, copying existing content of the MR, by the CVM, from private memory to the shared memory, unless provided with an indication that the existing content can be discarded. In an embodiment, the method comprises, by a user application in the CVM, allocating shared memory up front, and registering the allocated shared memory by the CVM as a MR for use in RDMA.

Any feature of one aspect or embodiment may be applied to other aspects or embodiments, in any appropriate combination. In particular, any feature of a method aspect or embodiment may be applied to an apparatus aspect or embodiment, and vice versa.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a computing device that communicates confidentially via an untrusted Remote Direct Memory Access (RDMA) Network Interface Controller (NIC), in accordance with an embodiment that is described herein;
Fig. 2 is a flow chart that schematically illustrates a method for sending data confidentially from a CVM using an untrusted RDMA NIC, in accordance with an embodiment that is described herein;
Fig. 3 is a block diagram that schematically illustrates a system comprising a computing device and a Graphics Processing Unit (GPU) that communicate confidentially via an untrusted RDMA NIC, in accordance with an alternative embodiment that is described herein; and
Fig. 4 is a block diagram that schematically illustrates a computing system that employs confidential communication via an untrusted RDMA NIC, in accordance with an embodiment that is described herein.

### DETAILED DESCRIPTION OF EMBODIMENTS

### OVERVIEW

Conventional CVMs typically distrust all external devices, including network adapters and even the hosting hypervisor. To this end, all application memory of a CVM is typically mapped as private memory that is inaccessible to external devices. External devices are therefore unable to read and write data to and from the CVM's memory using Direct Memory Access (DMA). For this reason, conventional CVMs cannot communicate using RDMA, or using any other user-space networking protocol. RDMA is particularly difficult to integrate with CVMs because the entire RDMA protocol stack is typically implemented in hardware.

Embodiments that are described herein provide improved confidential computing techniques that enable CVMs to communicate confidentially using RDMA via an untrusted RDMA NIC and/or an untrusted hypervisor.

In disclosed embodiments, a Central Processing Unit (CPU) runs a CVM that accesses an untrusted RDMA NIC over a peripheral bus. The CVM runs kernel-space code, e.g., a driver, that interacts with the NIC. In particular, the kernel maps various data structures used for communicating between the CVM and the NIC, e.g., transmit and receive Queue Pairs (QPs), Memory Regions (MRs) and doorbells, as shared memory that is accessible to the NIC.

Given this memory mapping, user-space applications running in the CVM can communicate efficiently using RDMA transactions, without compromising confidentiality. Since the shared memory is untrusted, the user-space applications are expected to encrypt the data being written therein.

In an embodiment, the CVM sends a packet by (i) writing an encrypted payload of the packet to a MR that is mapped to the shared memory, and (ii) posting a Work Queue Element (WQE), indicative of the packet to be sent, on a Queue Pair (QP) associated with the MR. In response, the RDMA NIC reads the WQE, retrieves the packet payload from the shared memory, generates a header for the packet and sends the packet to the network.

In an embodiment, when a packet is received by the RDMA NIC, the NIC (i) writes the encrypted packet payload to a MR that is mapped to the shared memory, and then (ii) posts a Completion Queue Element (CQE), indicative of the received packet, on a QP associated with the MR. The CVM reads the CQE, and, in response, reads the packet payload from the MR.

Various implementations and use cases of the disclosed techniques are described herein. In an example embodiment, a CVM uses one-sided RDMA operations such as READ and WRITE to implement a Key-Value Store (KVS) in shared memory. In another example embodiment, a CVM authorize an untrusted RDMA NIC to access a specified region in a shared memory of an external device, e.g., a Graphics Processing Unit (GPU).

The methods and systems described herein enable computing devices to combine the confidentiality of confidential computing with the high communication performance of RDMA. An alternative solution may involve a separate process of encrypting the PCIe traffic, e.g., using TEE Device Interface Security Protocol (TDISP). This solution, however, requires multiple encryption and decryption operations per transaction. The disclosed techniques, in contrast, minimize the number of encryption and decryption operations, thereby reducing latency and power consumption.

### SYSTEM DESCRIPTION

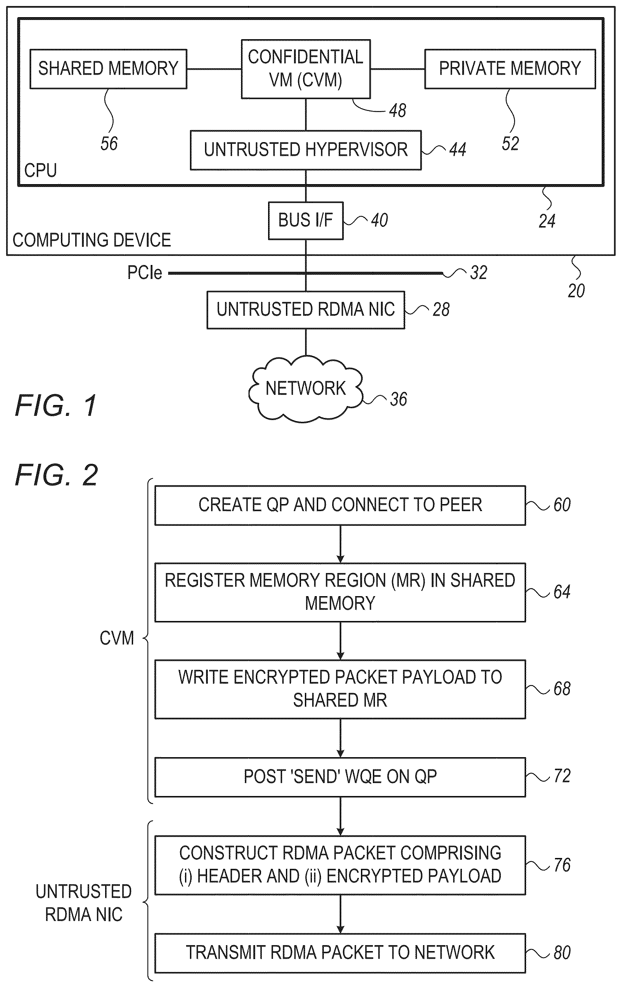

Fig. 1 is a block diagram that schematically illustrates a computing device 20 that communicates confidentially via an untrusted RDMA network adapter, in the present example an RDMA NIC 28, in accordance with an embodiment that is described herein. Computing device 20 may comprise, for example, a server in a data center or in a High-Performance Computing (HPC) cluster, or any other suitable type of computing device.

Computing device 20 is connected to NIC 28 via a peripheral bus, in the present example a Peripheral Component Interconnect express (PCIe) bus 32. Alternatively, any other suitable type of peripheral bus, e.g., Extensible Interface (AXI), Compute Express Link (CXL), Nvlink or Nvlink Chip-to-Chip (Nvlink-C2C), can be used. NIC 28 serves computing device 20 in sending and receiving RDMA traffic over a network 36. Network 36 may comprise, for example, an InfiniBand^{™} or Ethernet network.

In the present example, computing device 20 comprises a Central Processing Unit (CPU) 24 and a bus interface (I/F) 40. CPU 24 carries out the various computing tasks of the computing device. Interface 40 connects CPU 24 to PCIe bus 32.

CPU 24 runs a hypervisor 44 that allocates resources of the computing device to one or more Confidential Virtual Machines (CVMs) 48. The figure shows only a single CVM 48 for the sake of clarity. CVM 48 has access to two types of memory - A private memory 52 and a shared memory 56.

Private memory 52 is part of the CVM's user space, and is not accessible to external devices such as NIC 28 or hypervisor 44. Applications running in CVM 48 may therefore write plaintext (non-encrypted) data to the private memory.

Shared memory 56, on the other hand, is accessible to external devices such as NIC 28 or hypervisor 44. At least part of shared memory 56 is in the CVM's kernel space. The kernel code of CVM 48 is expected to write encrypted data in the shared memory. In various embodiments, shared memory 56 may be mapped to user and/or kernel address space.

Private memory 52 and shared memory 56 are depicted in the figure as part of CPU 24. Generally, however, private memory 52 and/or shared memory 56 may reside physically at any suitable location, e.g., outside CPU 24, in NIC 28, etc. In some embodiments, one of the Most Significant Bits (MSBs) of the physical address is dedicated to mark each address as shared or private.

In some embodiments, CVM 48 communicates over network 36 by executing RDMA transactions using RDMA NIC 28. The techniques described herein enable CVM 48 to maintain confidentiality of the communication traffic, even though both NIC 28 and hypervisor 44 are regarded as untrusted.

### CONFIDENTIAL COMMUNICATION VIA AN UNTRUSTED RDMA NIC

Fig. 2 is a flow chart that schematically illustrates a method for sending data confidentially from CVM 48 using RDMA via untrusted RDMA NIC 28, in accordance with an embodiment that is described herein. The method begins when a certain user application, which runs in the user space of CVM 48, has data to transmit in a packet to a peer endpoint.

At a QP creation operation 60, the kernel-space code in CVM 48 creates a QP for an RDMA connection with the peer. The kernel-space code connects the QP to the peer, e.g., using an RDMA Connection Manager (CM). The kernel-space code maps the QP to shared memory 56.

At a memory registration operation 64, the kernel-space code registers a Memory Region (MR) that is associated with the QP. The kernel-space code maps the MR to shared memory 56, as well.

At a payload storage operation 68, the user application writes an encrypted payload of the packet to the MR. In some embodiments, the user application first writes the data to be sent (in plaintext form) to private memory 52, and then encrypts the data and writes the encrypted data to the MR in shared memory 56.

At a WQE posting operation 72, the user application posts a 'SEND' WQE on the QP. Since both the QP and the MR are mapped to shared memory 56, both are accessible to RDMA NIC 28.

At a packet construction operation 76, NIC 28 constructs an RDMA packet that comprises (i) a header and (ii) the encrypted payload. To construct the packet, NIC 28 generates the packet header, and reads the encrypted payload from the MR in shared memory 56. The packet header is typically non-encrypted. At a packet transmission operation 80, NIC 28 sends the packet to the peer over network 36.

The method flow of Fig. 2 is an example flow that is chosen purely for the sake of conceptual clarity. In alternative embodiments, the disclosed techniques can be implemented using any other suitable flow. For example, in an embodiment, packet reception may comprise the following operations:
1. A packet comprising an encrypted payload is received by RDMA NIC 28. The data carried by the packet is destined to a certain user application in CVM 48.
2. NIC 28 writes the encrypted payload to a MR that is mapped to shared memory 56.
3. NIC 28 posts a Completion Queue Element (CQE), indicative of the received packet, on a QP associated with the MR.
4. The user application in CVM 48 reads the CQE.
5. In response to the CQE, the user application reads the encrypted packet payload from the MR in shared memory 56.
6. The user application decrypts the payload so as to reconstruct the plaintext data. The user application may, for example, store the plaintext data in private memory 52.

Typically, when a MR is mapped to a memory range [addr1..addr2], the existing content of [addr1..addr2] should be copied from private memory 52 to shared memory 56. In some embodiments, a user application may indicate to the kernel code (e.g., using a flag) that the existing content in [addr1..addr2] can be discarded. This mechanism enables the CVM to avoid unnecessary copy operations. Alternatively, the application may allocate shared memory directly, so mapping an MR to it does not require any further actions.

### USE CASES INVOLVING ONE-SIDED RDMA OPERATIONS

In some embodiments, some of the RDMA transactions supported by the disclosed techniques are one-sided operations, for example READ and WRITE. By using one-sided operations, CVM 48 can enable one or more RDMA initiators to access encrypted data in shared memory 56.

One example use case is a Key-Value Store (KVS) that shares plaintext KVS server memory among multiple clients. In the present context, the term "clients" refers, for example, to any suitable entities that use the KVS and have mutual trust in one another. In an embodiment, the clients can agree on an encryption key (not to be confused with the keys that are part of the key-value pairs), and then write encrypted key-value pairs to the KVS memory (in shared memory 56) using one-sided RDMA READ and WRITE transactions. Authentication data that resides alongside the key-value pairs can assist in identifying corrupted data that may arise when two clients write to the same key at the same time.

### 'GPU-DIRECT' USE CASE

'GPU direct' is a term referring to various techniques in which an I/O device (e.g., a network adapter or a storage device) reads or writes directly to or from the memory of a GPU, bypassing the CPU. For example, in a system comprising a VM, an RDMA NIC and a GPU, the VM can register a region of the GPU memory with the RDMA NIC, and then perform RDMA read/write operations in this memory region without involving the CPU's memory subsystem. In some embodiments described herein, a 'GPU direct" scheme may be implemented confidentially, with a CVM running in the CPU and a GPU-CVM (GCVM) running in the GPU.

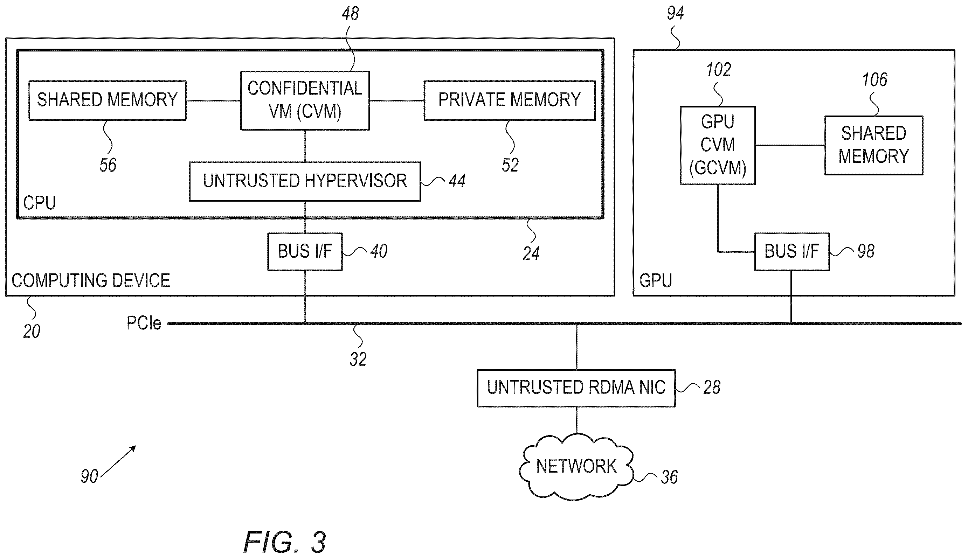

Fig. 3 is a block diagram that schematically illustrates system 90 in which both computing device 20 and a GPU 94 communicate confidentially via untrusted RDMA NIC 28, in accordance with an alternative embodiment that is described herein. Computing device 20 of Fig. 3 is similar to that of Fig. 1. GPU 94 comprises a bus interface (I/F) 98 for connecting to PCIe bus 32 and a shared GPU memory 106. The GPU runs a GCVM 102.

In an embodiment, CVM 48 (in CPU 24) authorizes untrusted RDMA NIC 28 to access a specified region in shared memory 106 of GPU 94. Following the authorization, GCVM 102 can carry out confidential RDMA transactions via NIC 28, using the memory region in question, without involving CPU 24. In an example embodiment, CVM 48 specifies the memory region in terms of a range of Bus Address Range (BAR) addresses in the memory space of PCIe bus 32.

More generally, the above-described mechanism is not limited to GPUs, and can be used with other external devices coupled to the peripheral bus, for example storage devices. In such embodiments, a CVM authorizes an untrusted RDMA network adapter to access a specified region in a shared memory of an external device coupled to the peripheral bus. Following the authorization, the external device can carry out confidential RDMA transactions via the untrusted RDMA network adapter, using the assigned memory region, without involving the CPU.

The configurations of computing devices 20 and 90, and their components such as CPU 24 and GPU 94, as depicted in Figs. 1 and 3, are example configurations that are chosen purely for the sake of conceptual clarity. Any other suitable configurations can be used in alternative embodiments.

In various embodiments, computing devices 20 and 90, and their components, may be implemented using suitable software, using suitable hardware such as one or more Application-Specific Integrated Circuits (ASIC) or Field-Programmable Gate Arrays (FPGA), or using a combination of hardware and software.

In some embodiments, certain elements of computing devices 20 and 90, e.g., CPU 24 and/or GPU 94, are implemented using one more general-purpose processors, which are programmed in software to carry out the techniques described herein. The software may be downloaded to the processors in electronic form, over a network, for example, or it may, alternatively or additionally, be provided and/or stored on non-transitory tangible media, such as magnetic, optical, or electronic memory.

### EXAMPLE SYSTEM USE-CASE

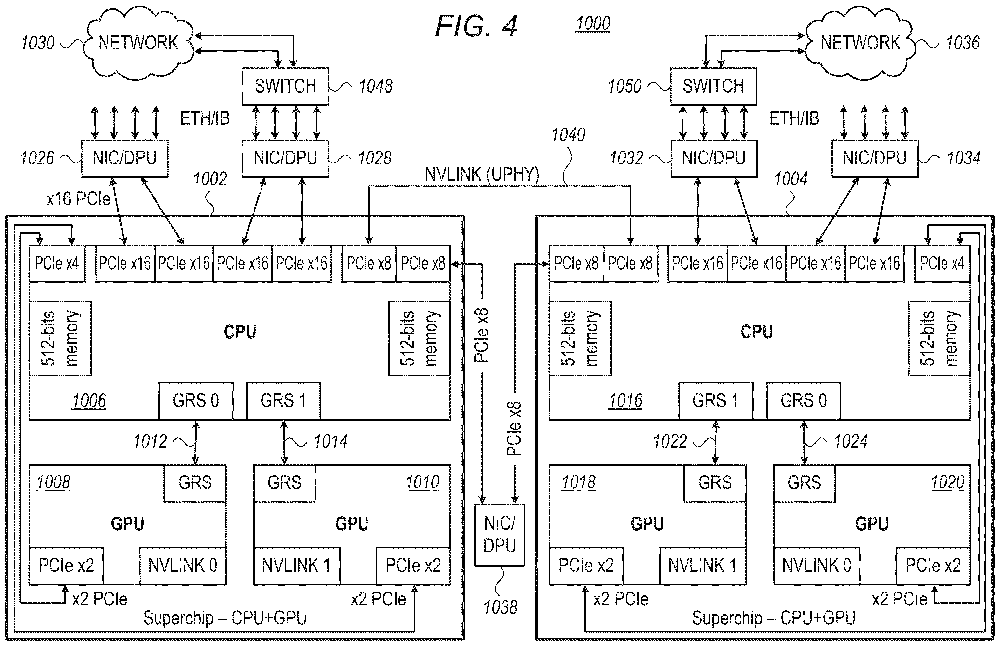

Fig. 4 is a block diagram that schematically illustrates a computing system 1000, e.g., a data center or a High-Performance Computing (HPC) cluster, which employs confidential communication via an untrusted RDMA NIC in accordance with an embodiment that is described herein. System 1000 comprises a plurality of subsystems, e.g. multiple processing devices coupled to each other, multiple network devices, and multiple networks, according to at least one embodiment. Computing system 1000 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 1000 and to one or more external networks 1030, 1036. In the present example, system 1000 comprises a packet switch 1048 that connects NIC/DPU 1028 to network 1030, and a packet switch 1050 that connects NIC/DPU 1032 to network 1036.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1000 can include one or more CPUs and one or more GPUs.

Fig. 4 also demonstrates an example architecture of a multi-GPU architecture. As illustrated in the figure, computing system 1000 includes a processing device 1002 with a multi-GPU architecture. In particular, processing device 1002 may be a system-on-chip and includes multiple subsystems such as a CPU 1006, a GPU 1008, and a GPU 1010. CPU 1006 can be coupled to GPU 1008 via a die-to-die (D2D) or chip-to-chip (C2C) interconnect 1012, such as a Ground-Referenced Signaling interconnect (GRS interconnect). CPU 1006 can be coupled to GPU 1010 via a D2D or C2C interconnect 1014. CPU 1006 can also couple to GPU 1008 and GPU 1010 via PCIe interconnects.

CPU 1006 can be coupled to one or more NICs or DPUs, which are coupled to one or more networks. For example, as illustrated in Fig. 4, CPU 1006 is coupled to a first NIC/DPU 1026, which is coupled to a network 1030. CPU 1006 is also coupled to a second NIC/DPU 1028, which is coupled to network 1030 via switch 1048. NIC/DPU 1026 and NIC/DPU 1028 can be coupled to network 1030 over Ethernet (ETH), NVLINK or InfiniBand (IB) connections, for example.

Computing system 1000 also includes a processing device 1004 with a multi-GPU architecture. In particular, processing device 1004 includes multiple subsystems including a CPU 1016, a GPU 1018, and a GPU 1020. CPU 1016 can be coupled to GPU 1018 via an D2D or C2C interconnect 1022. CPU 1016 can be coupled to GPU 1020 via a D2D or C2C interconnect 1024. CPU 1016 can also couple to GPU 1018 and GPU 1020 via PCIe interconnects. CPU 1016 can be coupled to one or more NICs or DPUs, which are coupled to one or more networks. For example, as illustrated in Fig. 4, CPU 1016 is coupled to a first NIC/DPU 1032, which is coupled to a network 1036. CPU 1016 is also coupled to a second NIC/DPU 1034, which is coupled to network 1036 via switch 1050. NIC/DPU 1032 and NIC/DPU 1034 can be coupled to network 1036 over Ethernet (ETH), NVLINK or InfiniBand (IB) connections.

In at least one embodiment, processing device 1002 and processing device 1004 can communication with each other via a NIC/DPU 1038, such as over PCIe interconnects. Processing device 1002 and processing device 1004 can also communicate with each other over a high-bandwidth communication interconnects 1040, such as an NVLink interconnect or other high-speed interconnects.

The packet switches in Fig. 4 may comprise, for example, Nvidia Quantum-2 switches. The NICs/DPUs in the figure may comprise, for example, Nvidia Bluefield DPUs. In various embodiments, any of the NICs/DPUs of system 1000 may comprise untrusted RDMA NICs. Any of the processing devices of system 1000, e.g., devices 1002 and 1004, may employ the disclosed confidential computing techniques.

Although the embodiments described herein mainly address CVMs that communicate using RDMA, the methods and systems described herein can also be used with other user-space networking protocols. Non-limiting examples include Ultra Ethernet, Google Falcon, as well as user-space protocols built on frameworks such as DPDK or Google Snap.

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A computing device, comprising:
a bus interface, to communicate over a peripheral bus with an untrusted Remote Direct Memory Access (RDMA) network adapter; and
a Central Processing Unit (CPU), to:
run a Confidential Virtual Machine (CVM); and
enable the CVM to conduct RDMA transactions over a network via the untrusted RDMA network adapter, by mapping one or more RDMA Memory Regions (MR) to a shared memory that is accessible to the untrusted RDMA network adapter.

2. The computing device according to claim 1, wherein the CPU is to further run an untrusted hypervisor, and wherein the CVM is to communicate with the untrusted RDMA network adapter via the untrusted hypervisor.

3. The computing device according to claim 1 or 2, wherein the untrusted RDMA network adapter exchanges packets with the CVM using one or more Queue Pairs (QPs), and wherein the CPU is to map the one or more QPs to the shared memory.

4. The computing device according to claim 1, 2, or 3, wherein the CVM is to send a packet by:
writing an encrypted payload of the packet to a MR that is mapped to the shared memory; and
posting a Work Queue Element (WQE), indicative of the packet to be sent, on a Queue Pair (QP) associated with the MR.

5. The computing device according to any of claims 1-4, wherein the CVM is to receive a packet by:
reading a Completion Queue Element (CQE), indicative of the received packet, from a Queue Pair (QP) associated with a MR that is mapped to the shared memory; and
reading an encrypted payload of the packet from the MR.

6. The computing device according to any of claims 1-5, wherein the CVM is to authorize the untrusted RDMA network adapter to access a specified region in a shared memory of an external device coupled to the peripheral bus.

7. The computing device according to claim 6, wherein the external device is a Graphics Processing Unit (GPU).

8. The computing device according to any of claims 1-7, wherein the CVM is to implement a Key-Value (KV) store comprising encrypted KV pairs in the shared memory.

9. The computing device according to any of claims 1-8, wherein, upon mapping a given MR to the shared memory, the CVM is to copy existing content of the MR from private memory to the shared memory, unless provided with an indication that the existing content can be discarded.

10. The computing system according to any of claims 1-9, wherein a user application in the CVM is to allocate shared memory up front, and the CVM is to register the allocated shared memory as a MR for use in RDMA.

11. A computing method, comprising:
running a Confidential Virtual Machine (CVM) in a Central Processing Unit (CPU); and
enabling the CVM to conduct RDMA transactions over a network via an untrusted Remote Direct Memory Access (RDMA) network adapter, by mapping one or more RDMA Memory Regions (MR) to a shared memory that is accessible to the untrusted RDMA network adapter.

12. The method according to claim 11, further comprising running an untrusted hypervisor in the CPU, and communicating between the CVM and the untrusted RDMA network adapter via the untrusted hypervisor.

13. The method according to claim 11 or 12, wherein the untrusted RDMA network adapter exchanges packets with the CVM using one or more Queue Pairs (QPs), and wherein enabling the CVM to conduct RDMA transactions mapping the one or more QPs to the shared memory.

14. The method according to claim 11, 12, or 13, and comprising sending a packet by the CVM, by:
writing an encrypted payload of the packet to a MR that is mapped to the shared memory; and
posting a Work Queue Element (WQE), indicative of the packet to be sent, on a Queue Pair (QP) associated with the MR.

15. The method according to claim 11-14, and comprising receiving a packet by the CVM, by:
reading a Completion Queue Element (CQE), indicative of the received packet, from a Queue Pair (QP) associated with a MR that is mapped to the shared memory; and
reading an encrypted payload of the packet from the MR.
